# EUROPÄISCHE PATENTSCHRIFT

(11) **EP 1 590 717 B1**
(45) Veröffentlichungstag und Bekanntmachung des Hinweises auf die Patenterteilung: **19.07.2006**
(21) Anmeldenummer: 03767686.3
(22) Anmeldetag: 27.11.2003
(51) Int. Cl.: G05G 9/047

(54) **VORRICHTUNG ZUM STEUERN EINES FAHRZEUGES**
DEVICE FOR CONTROLLING A VEHICLE
DISPOSITIF DE COMMANDE D'UN VEHICULE

(30) Priorität: 07.02.2003 DE 10305261
(43) Veröffentlichungstag der Anmeldung: 02.11.2005
(73) Patentinhaber: Wittenstein AG, 97999 Igersheim (DE)
(72) Erfinder: HENLE, Jörg, 97922 Deubach (DE)
(74) Vertreter: Weiss, Peter
(86) Internationale Anmeldenummer: PCT/EP2003/013361
(87) Internationale Veröffentlichungsnummer: WO 2004/070489

(56) Entgegenhaltungen:
- US-A- 4 422 345
- US-A- 4 555 960
- US-A- 6 057 828
- PATENT ABSTRACTS OF JAPAN vol. 1997, no. 07, 31. Juli 1997 (1997-07-31) -& JP 09 062392 A (NEC CORP), 7. März 1997 (1997-03-07)

## Beschreibung

Die vorliegende Erfindung betrifft eine Vorrichtung zum Steuern eines Fahrzeuges, insbesondere Flugzeuges, Helikopters oder auch eines Simulators, mit einem Handgriff, welcher um zwei in etwa senkrecht zueinander stehenden Achsen bewegbar gelagert ist.

Derartige Vorrichtungen sind in vielfältiger Form und Ausführung auf dem Markt bekannt und gebräuchlich. Sie dienen im wesentlichen zur Steuerung von Flugzeugen, Helikoptern, Flugsimulatoren od. dgl.. Dabei ist ein Handgriff im wesentlichen um zwei Achsen verschwenkbar um eine Steuerung bspw. eines Helikopters, insbesondere seines Rotors vorzunehmen.

Bei herkömmlichen Vorrichtungen ist nachteilig, dass diese gross, komplex und aufwendig, insbesondere mit unterschiedlichen Gestängen, ausgebildet sind. Dabei sind bei der Helikoptersteuerung zur Herstellung von zwei unterschiedlichen bewegbaren Achsen komplizierte Hebel und Umlenksysteme erforderlich, um bspw. den Rotor anzusteuern. Daher sind diese Vorrichtungen teuer in der Anschaffung und aufwendig zu warten.

Die US 4,422,345 offenbart einen Steuerhebel, der mechanisch um zwei in unterschiedlichen Ebenen angeordneten Achsen verschwenkbar ist.

Nach der US 6,057,828 ist eine Vorrichtung zur Bestimmung von Kräften in virtuellen Umgebungen beliebiger Werkzeuge beschrieben, bei welcher eine Kraft eines beliebigen Werkzeuges oder Handgriffes ermittelbar ist.

Die US 4,555,960 offenbart einen Joystick mit sechs Freiheitsgraden, wobei der Handgriff selbst nochmals über entsprechenden Kreuzgelenke zwei zusätzliche Bewegungen detektiert.

Aus dem Patent Abstract of Japan, Vol. 1997, No. 07, 31.07.1997 & JP 09 062392 A ist eine Kontrolleinrichtung aufgezeigt, bei welcher zwischen Handgriff und einer entsprechenden Halterung hierfür ein Kraftsensor zur Ermittlung der am Handgriff anliegenden Last angeordnet ist. Dabei ist der Handgriff über zwei zueinander gelenkartige Platten mit einer Grundplatte verbunden und nur in einer Ebene bewegbar.

Der vorliegenden Erfindung liegt die Aufgabe zugrunde, eine Vorrichtung der Eingangs genannten Art zu schaffen, welche die genannten Nachteile beseitigt, und mit welcher auf einfache und kostengünstige Weise eine Vorrichtung zu exakten Steuerung von Fahrzeugen, Flugzeugen, Helikoptern, Simulatoren möglich ist, die auch eine aktive Kraftrückführung auf den Handgriff zulässt. Dabei soll diese Vorrichtung bei beschränkten Einbauräumen gut untergebracht werden können. Zudem soll die Sicherheit im Betrieb erhöht werden.

Zur Lösung dieser Aufgabe führen die Merkmale des Patentanspruches 1.

Bei der vorliegenden Erfindung ist von Bedeutung, dass eine Vorrichtung geschaffen ist, die aus einem Rahmenelement mit jeweils seitlichen, anschliessenden Grundplatten gebildet ist. An eine Grundplatte schliesst ein Antriebselement an, welches über ein Halteelement ein Kraftsensor verschwenkbar um eine erste Achse lagert bzw. eine Schwenkbewegung um diese erste Achse ggf. mittels Krafrückführung zulässt.

Zur Bewegung des Handgriffes um eine weitere hierzu lotrechte Achse schliesst an eine Grundplatte des Rahmenelementes ein weiteres Antriebselement an, welches vorzugsweise mit der Struktur des Fahrzeuges bzw. Hubschraubers oder Simulators fest in Verbindung steht.

In einem bevorzugten Ausführungsbeispiel liegen die beiden Achsen, die lotrecht zueinander stehen in unterschiedlichen, parallelen Ebenen und sind zueinander verschoben.

Hierdurch wird gewährleistet, dass unterschiedliche Bewegungsmöglichkeiten bzw. Schwenkmechanismen des Handgriffes realisiert werden, was insbesondere bei der Ansteuerung von Rotoren von Hubschraubern von Bedeutung ist.

Dabei soll gewährleistet sein, dass die eine Achse um die andere Achse nach oben oder nach unten verschoben ist. Hierdurch lassen sich durch unterschiedliche Verschwenkungen der Achsen unterschiedliche Schwenkbewegungen um die erste Achse oder um die zweite Achse realisieren. Zusätzlich lässt sich über den Kraftsensor eine am Handgriff anliegende Kraft messen, die eine Kraftrückführung über die Antriebselemente zulässt. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele; diese zeigt in
Figur 1 eine perspektivische Darstellung einer erfindungsgemässen Vorrichtung zum Steuern eines Fahrzeuges, insbesondere eines Flugzeuges;
Figur 2a eine perspektivische Draufsicht auf ein bevorzugtes Ausführungsbeispiel der Vorrichtung zum Steuern eines Flugzeuges gem. Figur 1;
Figur 2b eine perspektivische Rückansicht der Vorrichtung gem. Figur 2a;
Figur 3a eine perspektivische Draufsicht auf ein noch weiteres Ausführungsbeispiel der Vorrichtung gem. Figur 1;
Figur 3b eine schematisch dargestellte Rückansicht der Vorrichtung gem. Figur 3a.

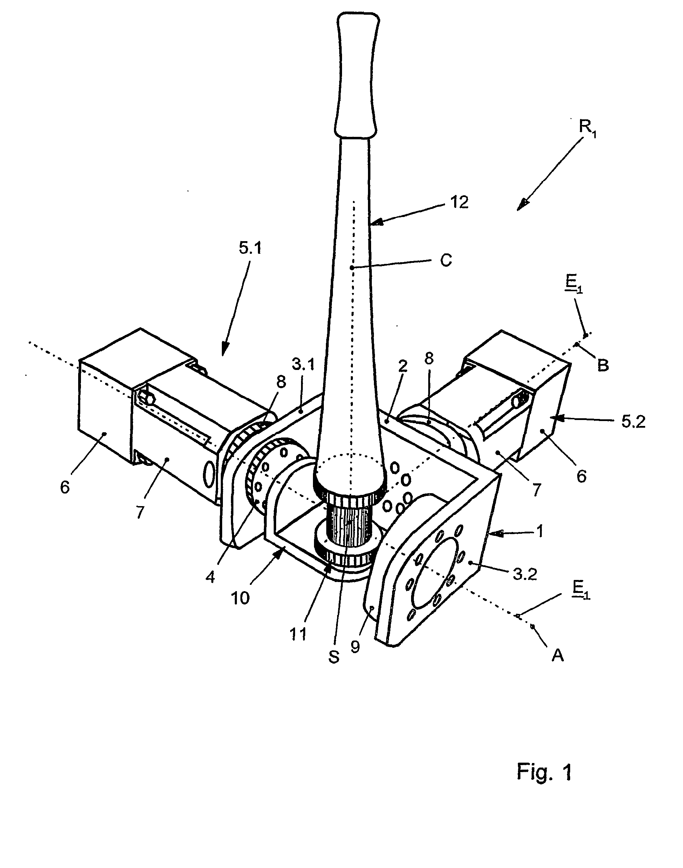

Gemäss Figur 1 weist eine erfindungsgemässe Vorrichtung R₁ zum Steuern von Fahrzeugen oder Simulatoren, insbesondere Flugzeugsimulatoren ein Rahmenelement 1 auf, welches vorzugsweise aus einer Grundplatte 2 und jeweils seitlich und rechtwinklig zur Grundplatte 2 anschliessende Halteplatten 3.1, 3.2 gebildet ist.

An das Rahmenelement 1, insbesondere an die Halteplatte 3.1 schliesst über einen Ausgangsflansch 4 ein erstes Antriebselement 5.1 aussen an. Dabei liegt das Antriebselement 5.1 in einer Achse A die lotrecht zur Halteplatte 3.1 verläuft.

An die Grundplatte 2 des Rahmenelementes schliesst ein weiteres Antriebselement 5.2 aussen an, welches hier nicht dargestellt, mit einer Struktur, einer Halterung od. dgl. des Simulators oder Fahrzeuges fest verbunden ist.

Das Antriebselement 5.2 ist in einer Achse B angeordnet, die in etwa lotrecht zur Grundplatte 2 verläuft. In diesem Ausführungsbeispiel schneiden sich die Achsen A und B in einem Schnittpunkt S in einer gemeinsamen Ebene E₁.

Die Antriebselemente 5.1, 5.2 sind im wesentlichen aus einer elektronischen Regeleinrichtung 6, daran anschliessendem Elektromotor 7 mit nachgeschaltetem Getriebe 8 gebildet. Dabei kann die elektronische Regeleinrichtung 6 eine Kraftregelung, Motorenregelung, etc. enthalten.

An die Halteplatte 3.2 schliesst ein Ausgleichgewicht 9 an, dessen Schwerpunkt in die Achse A fällt. Das Ausgleichsgewicht 9 dient dem Massenausgleich des Antriebselementes 5.1, welches zusammen mit dem Rahmenelement 1 um die Achse B mittels des Antriebselementes 5.2 verschwenkbar ist.

An das Antriebselement 5.1, im Anschluss an den Ausgangsflansch 4, schliesst ein Halteelement 10 an, welches um die Achse A mittels des Antriebselementes 5.1 schwenkbar ist. Bevorzugt ist das Halteelement 10 als Winkel ausgebildet, an welchem ein Kraftsensor 11 anschliesst. Hierdurch lässt sich die Position des Kraftsensors ebenfalls beeinflussen.

Der Kraftsensor 11 dessen Achse C durch den Schnittpunkt S der Achsen A und B lotrecht verläuft, dient der Aufnahme eines Handgriffes 12, welcher aktiv steuerbar oder mittels der menschlichen Hand um die Achsen A und B verschwenkbar gelagert ist. Dabei gewähren die Antriebselemente 5.1, 5.2 eine Kraftrückführung, bei aktiver Ansteuerung. Zu dem Kraftsensor 11 lassen sich die entsprechende Rückstellmomente aufnehmen und entsprechend über die Antriebselemente 5.1, 5.2 regeln bzw. ausgleichen.

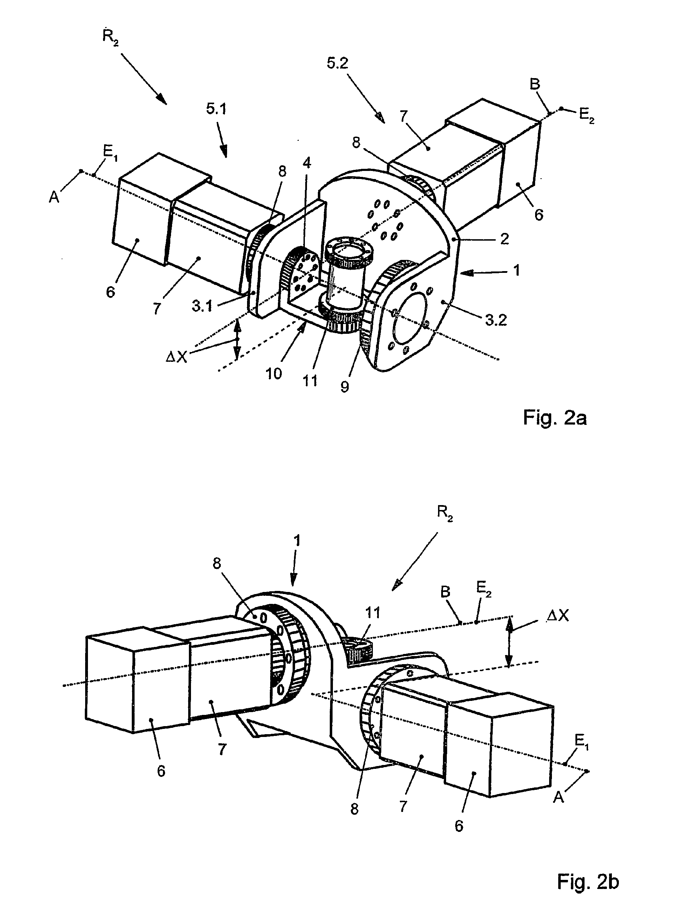

In einem weiteren bevorzugten Ausführungsbeispiel der vorliegenden Erfindung gem. Figur 2a ist eine Vorrichtung R₂ aufgezeigt, die in etwa der o. g. Art entspricht.

Ein wesentlicher Unterschied ist hier, dass das Antriebselement 5.2 bzw. dessen Achse B um eine Verschiebung ΔX gegenüber der Achse A des Antriebselements 5.1 verschoben ist. Die Achsen A und B stehen lotrecht zueinander, sind jedoch in unterschiedlichen Ebenen E₁, E₂, welche parallel zueinander sind, um die Verschiebung ΔX zueinander verschoben.

Dies gewährleistet, dass unterschiedliche Bewegungsmöglichkeiten des hier nicht dargestellten Handgriffes 12 um die Achse A oder B möglich sind.

Die entsprechende Rückansicht zeigt nochmals die entsprechende Verschiebung der Achsen A und B zueinander.

Dabei liegt die Achse B oberhalb der Achse A, wobei die Grundplatte 1 des Rahmenelementes 1 in diesem Bereich stirnseitig die Halteplatten 3.1, 3.2 vorzugsweise leicht gewölbt überragt.

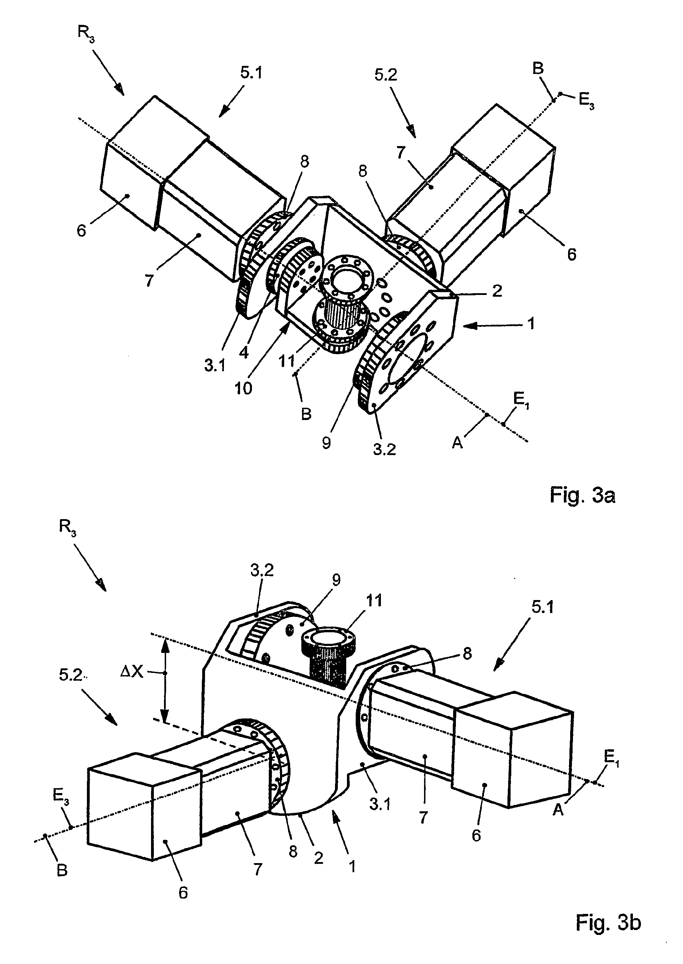

Im Ausführungsbeispiel der vorliegenden Erfindung gem. den Figuren 3a und 3b ist eine Vorrichtung R₃ aufgezeigt, die in etwa der vorbeschriebenden Art entspricht.

Unterschiedlich ist hier, dass die Achse B unterhalb der Achse A um die Verschiebung ΔX in oben beschriebener Weise verschoben ist. Dabei stehen die Achsen A und B ebenfalls lotrecht zueinander und liegen in unterschiedlichen Ebenen E₁, E₂, welche zueinander parallel sind.

Hierdurch wird ebenfalls gewährleistet, dass der Handgriff 12, welcher an den Kraftsensor 11 anschliesst, um die Achse A und B unterschiedliche Bewegungen ausführt. Dabei kann auf unterschiedliche Einbauräume Einfluss genommen werden, wenn die Achse A oberhalb der Achse B liegt oder umgekehrt.

Zudem ist möglich, dass die unterschiedlichen Achsen A und B bzw. Drehachsen eine Höhenverstellung des Kraftsensors 11 bzw. des Handgriffes 12 zusätzlich gewährleisten.

**Positionszahlenliste**

| | | | | | |
|---|---|---|---|---|---|
| 1 | Rahmenelement | 34 | | 67 | |
| 2 | Grundplatte | 35 | | 68 | |
| 3 | Halteplatte | 36 | | 69 | |
| 4 | Ausgangsflansch | 37 | | 70 | |
| 5 | Antriebselement | 38 | | 71 | |
| 6 | Regeleinrichtung | 39 | | 72 | |
| 7 | Elektromotor | 40 | | 73 | |
| 8 | Getriebe | 41 | | 74 | |
| 9 | Ausgleichewicht | 42 | | 75 | |
| 10 | Halteelement | 43 | | 76 | |
| 11 | Kraftsensor | 44 | | 77 | |
| 12 | Handgriff | 45 | | 78 | |
| 13 | | 46 | | 79 | |
| 14 | | 47 | | | |
| 15 | | 48 | | | |
| 16 | | 49 | | R₁ | Vorrichtung |
| 17 | | 50 | | R₂ | Vorrichtung |
| 18 | | 51 | | R₃ | Vorrichtung |
| 19 | | 52 | | | |
| 20 | | 53 | | | |
| 21 | | 54 | | ΔX | Verschiebung |
| 22 | | 55 | | | |
| 23 | | 56 | | A | Achse |
| 24 | | 57 | | B | Achse |
| 25 | | 58 | | C | Achse |
| 26 | | 59 | | | |
| 27 | | 60 | | | |
| 28 | | 61 | | E₁ | Ebene |
| 29 | | 62 | | E₂ | Ebene |
| 30 | | 63 | | E₃ | Ebene |
| 31 | | 64 | | | |
| 32 | | 65 | | S | Schnittpunkt |
| 33 | | 66 | | | |

## Patentansprüche

1. Vorrichtung zum Steuern eines Fahrzeuges, insbesondere Flugzeuges, Helikopters oder auch eines Simulators, mit einem Handgriff (12), welcher um zwei in etwa senkrecht zueinander stehenden Achsen (A, B) bewegbar gelagert ist,
dass die Achsen (A, B) in verschiedenen Ebenen (E₁ und E₂ oder E₁ und E₃) liegen und zueinander verschoben sind, und ein Rahmenelement (1) vorgesehen ist, in welchem in etwa senkrecht zueinander zwei Antriebselemente (5.1, 5.2) angreifen, und die Antriebselemente (5.1, 5.2) in den Achsen (A, B) rechtwinklig zueinander an das Rahmenelement (1) anschliessen, **dadurch gekennzeichnet**, wobei die Achsen (A und B) zueinander um eine Verschiebung (ΔX) zueinander verschoben, und die Antriebselemente (5.1, 5.2) aus einer elektronischen Regeleinrichtung (6), mit ggf. integrierter Kraftregelung und Motorregelung, mit anschliessendem Elektromotor (7) und nachgeschlatetem Getriebe (8) gebildet sind, wobei über die Antriebselemente (5.1, 5.2) der Handgriff (12) aktiv um die Achsen (A und B) verschwenkbar und steuerbar ist, wobei mittels der Antriebselemente (5.1, 5.2) und des Kraftsensors (11) eine Kraftrückführung ermöglicht und eine aktive Steuerung des Handgriffes (12) gewährleistet ist.

2. Vorrichtung nach Anspruch 1, **dadurch gekennzeichnet, dass** in einer Achse (A) ein Halteelement (10) zur Aufnahme eines Kraftsensors (11) vorgesehen ist, wobei der Kraftsensor mittig, oder aussermittig, senkrecht nach oben oder nach unten zur Achse (A) verschoben, angeordnet ist.

3. Vorrichtung nach Anspruch 1 oder 2, **dadurch gekennzeichnet, dass** das Rahmenelement (1) aus einer Grundplatte (2) mit zumindest einer daran rechtwinklig anschliessenden Halteplatte (3.1, 3.2) gebildet ist.

4. Vorrichtung nach wenigstens einem der Ansprüche 1 bis 3, **dadurch gekennzeichnet, dass** das Rahmenelement (1) u-artig aus Grundplatte (2) mit jeweils seitlich und rechtwinklig anschliessenden Halteplatten (3.1, 3.2) gebildet ist.

5. Vorrichtung nach Anspruch 3 oder 4, **dadurch gekennzeichnet, dass** ein erstes Antriebselement (5.1) an die eine Grundplatte (2) anschliesst, wobei ein zweites Antriebselement (5.2) ausserhalb der Grundplatte (2) dieser festgelegt ist und innerhalb der Grundplatte (2) um die Achse (A) verschwenkbar das Halteelement (10) zur Aufnahme des Kraftsensors (11) angeordnet ist.

6. Vorrichtung nach wenigstens einem der Ansprüche 3 bis 5, **dadurch gekennzeichnet, dass** an die Grundplatte (2) das zweite Antriebselement (5.2) in etwa lotrecht zum ersten Antriebselement (5.1) anschliesst.

7. Vorrichtung nach wenigstens einem der Ansprüche 1 bis 6, **dadurch gekennzeichnet, dass** an das erste Antriebselement (5.1) über einen Ausgangsflansch (4) das Halteelement (10) anschliesst, welchem der Kraftsensor (11) und daran anschliessend der Handgriff (12) aufsitzt.

8. Vorrichtung nach wenigstens einem der Ansprüche 1 bis 7, **dadurch gekennzeichnet, dass** das Halteelement (10) als um die Achse (A) verschwenkbare Platte oder Winkel ausgebildet ist, welche den Kraftsensor (11) und daran anschliessend den Handgriff (12) trägt.

9. Vorrichtung nach wenigstens einem der Ansprüche 1 bis 8, **dadurch gekennzeichnet, dass** an die Grundplatte (2) parallel und beabstandet, insbesondere rechtwinklig eine zweite Halteplatte (3.2) anschliesst, die der Aufnahme eines Ausgleichgewichtes (9) dient, dessen Schwerpunkt in der Achse (A) liegt.

10. Vorrichtung nach wenigstens einem der Ansprüche 1 bis 9, **dadurch gekennzeichnet, dass** das zweite Antriebselement (5.2) fest an einer Struktur oder Rahmen eines Fahrzeuges, eines Flugzeuges od. dgl. festgelegt ist.

11. Vorrichtung nach wenigstens einem der Ansprüche 1 bis 10, **dadurch gekennzeichnet, dass** die Achse (B) oberhalb der Achse (A) um die Verschiebung (ΔX) verschoben ist.

12. Vorrichtung nach wenigstens einem der Ansprüche 1 bis 10, **dadurch gekennzeichnet, dass** die Achse (B) unterhalb der Achse (A) um eine Verschiebung (ΔX) verschoben ist.

13. Vorrichtung nach wenigstens einem der Ansprüche 1 bis 12, **dadurch gekennzeichnet, dass** die Achsen (A und B) zueinander lotrecht verlaufen und in unterschiedlichen Ebenen (E₁ und E₂ oder E₁ und E₃) liegen, welche parallel zueinander sind.

## Claims

1. Device for controlling a vehicle, in particular an aircraft, helicopter or alternatively a simulator, comprising a handle (12) that is mounted movably about two axes (A, B) lying approximately at right angles to one another, wherein the axes (A, B) lie in different planes (E₁ and E₂ or E₁ and E₃) and are displaced relative to one another, and a frame element (1) is provided, in which two drive elements (5.1, 5.2) act approximately at right angles to one another, and the drive elements (5.1, 5.2) are attached in the axes (A, B) at right angles to one another to the frame element (1),
**characterized in**
**that** the axes (A and B) are displaced relative to one another by a mutual displacement (ΔX), and the drive elements (5.1, 5.2) are formed by an electronic control device (6), with optionally integrated force control and motor control, with adjoining electric motor (7) and rear-mounted gear unit (8), wherein via the drive elements (5.1, 5.2) the handle (12) is actively pivotable about the axes (A and B) and controllable, wherein by means of the drive elements (5.1, 5.2) and the force sensor (11) a force feedback is allowed and active control of the handle (12) is guaranteed.

2. Device according to claim 1, **characterized in that** in one axis (A) a holding element (10) is provided for receiving a force sensor (11), wherein the force sensor is disposed centrically or eccentrically, displaced vertically upwards or downwards relative to the axis (A).

3. Device according to claim 1 or 2, **characterized in that** the frame element (1) is formed from a base plate (2) having at least one holding plate (3.1, 3.2) attached at right angles thereto.

4. Device according to at least one of claims 1 to 3, **characterized in that** the frame element (1) is formed in a U-shaped manner from base plate (2) with holding plates (3.1, 3.2) attached in each case laterally and at right angles.

5. Device according to claim 3 or 4, **characterized in that** a first drive element (5.1) is attached to the one base plate (2), wherein a second drive element (5.2) is fixed to the base plate (2) at the outside thereof and the holding element (10) for receiving the force sensor (11) is disposed inside the base plate (2) so as to be pivotable about the axis (A).

6. Device according to at least one of claims 3 to 5, **characterized in that** the second drive element (5.2) is attached approximately perpendicular to the first drive element (5.1) to the base plate (2).

7. Device according to at least one of claims 1 to 6, **characterized in that** the holding element (10), on which is seated the force sensor (11) with the handle (12) seated thereon, is attached to the first drive element (5.1) by an output flange (4).

8. Device according to at least one of claims 1 to 7, **characterized in that** the holding element (10) is designed as a plate or angle, which is pivotable about the axis (A) and carries the force sensor (11) with the handle (12) attached thereto.

9. Device according to at least one of claims 1 to 8, **characterized in that** a second holding plate (3.2) is attached parallel and with clearance, in particular at right angles to the base plate (2) and is used to receive a compensating weight (9), the centre of gravity of which lies in the axis (A).

10. Device according to at least one of claims 1 to 9, **characterized in that** the second drive element (5.2) is fastened in a fixed manner to a structure or frame of a vehicle, an aircraft or the like.

11. Device according to at least one of claims 1 to 10, **characterized in that** the axis (B) is displaced by the displacement (ΔX) above the axis (A).

12. Device according to at least one of claims 1 to 10, **characterized in that** the axis (B) is displaced by the displacement (ΔX) below the axis (A).

13. Device according to at least one of claims 1 to 12, **characterized in that** the axes (A and B) extend perpendicular to one another and lie in different planes (E₁ and E₂ or E₁ and E₃), which are parallel to one another.

## Revendications

1. Dispositif de commande d'un véhicule, en particulier d'un avion, d'un hélicoptère ou également d'un simulateur, avec une poignée (12) qui est montée de manière déplaçable autour de deux axes (A, B) environ perpendiculaires entre eux, les axes (A, B) se situant dans des plans différents (E₁ et E₂ ou E₂ et E₃) et étant décalés l'un par rapport à l'autre, et un élément de cadre (1) étant prévu, dans lequel viennent en prise deux éléments d'entraînement (5.1, 5.2) environ perpendiculaires entre eux, et les éléments d'entraînement {5.1, 5.2) dans les axes (A, B) se raccordant environ à angle droit entre eux à l'élément de cadre (1),
**caractérisé par le fait**
**que** les axes (A et B) sont décalés l'un par rapport à l'autre d'un décalage (ΔX), et que les éléments d'entraînement (5.1, 5.2) sont constitués par un dispositif de réglage électronique (6), éventuellement à régulation de force et régulation de moteur intégrées, avec un moteur électrique (7) qui s'y raccorde et un engrenage (8) connecté en aval, la poignée (12) pouvant, par l'intermédiaire des éléments d'entraînement (5.1, 5.2), être activement pivotée autour des axes (A et B) et commandée, au moyen des éléments d'entraînement (5.1, 5.2) et du capteur de force (11) étant permis un retour de force et assuré une commande active de la poignée (12).

2. Dispositif selon la revendication 1, **caractérisé par le fait que** sur un axe (A) est prévu un élément de maintien (10) destiné à recevoir un capteur de force (11), le capteur de force étant disposé au centre ou excentré, décalé perpendiculairement vers le haut ou vers le bas par rapport à l'axe (A).

3. Dispositif selon la revendication 1 ou 2, **caractérisé par le fait que** l'élément de cadre (1) est constitué par une plaque de base (2) avec au moins une plaque de maintien (3.1, 3.2) s'y raccordant à angle droit.

4. Dispositif selon au moins l'une des revendications 1 à 3, **caractérisé par le fait que** l'élément de cadre (1) est réalisé en forme de U par une plaque de base (2) avec des plaques de maintien (3.1, 3.2) s'y raccordant, chacune, latéralement et à angle droit.

5. Dispositif selon la revendication 3 ou 4, **caractérisé par le fait qu'**un premier élément d'entraînement (5.1) vient se raccorder à l'une plaque de maintien (2), un deuxième élément d'entraînement (5.2) étant fixé en dehors de la plaque de base (2) et dans la plaque de base (2) étant disposé, pivotable autour de l'axe (A), l'élément de maintien (10) destiné à recevoir le capteur de force (11).

6. Dispositif selon au moins l'une des revendications 3 à 5, **caractérisé par le fait qu'**à la plaque de base (2) vient se raccorder le deuxième élément d'entraînement (5.2), environ perpendiculairement au premier élément d'entraînement (5.1).

7. Dispositif selon au moins l'une des revendications 1 à 6, **caractérisé par le fait qu'**au premier élément d'entraînement (5.1) vient se raccorder, par l'intermédiaire d'une bride de sortie (4), l'élément de maintien (10) sur lequel se trouvent le capteur de force (11) et la poignée (12) y raccordée.

8. Dispositif selon au moins l'une des revendications 1 à 7, **caractérisé par le fait que** l'élément de maintien (10) est réalisé sous forme de plaque ou d'équerre pivotable autour de l'axe (A), qui porte le capteur de force (11) et la poignée (12) y raccordée.

9. Dispositif selon au moins l'une des revendications 1 à 7, **caractérisé par le fait qu'**à la plaque de base (2) vient se raccorder, parallèle et à distance, en particulier à angle droit, une deuxième plaque de maintien (3.2) servant à recevoir un contrepoids (9) dont le centre de gravité se trouve sur l'axe (A).

10. Dispositif selon au moins l'une des revendications 1 à 9, **caractérisé par le fait que** le deuxième élément d'entraînement (5.2) est fixé fermement à une structure ou châssis d'un véhicule, d'un avion ou autre.

11. Dispositif selon au moins l'une des revendications 1 à 10, **caractérisé par le fait que** l'axe (B) est décalé du décalage (ΔX) au-dessus de l'axe (A).

12. Dispositif selon au moins l'une des revendications 1 à 10, **caractérisé par le fait que** l'axe (B) est décalé du décalage (ΔX) au-dessous de l'axe (A).

13. Dispositif selon au moins l'une des revendications 1 à 12, **caractérisé par le fait que** les axes (A et B) s'étendent perpendiculairement entre eux et se situent dans des plans différents (E₁ et E₂ ou E₁ et E₃) qui sont parallèles entre eux.
